# EUROPEAN PATENT APPLICATION

(11) **EP 4 646 018 A1**
(43) Date of publication of application: **05.11.2025**
(21) Application number: 25173177.4
(22) Date of filing: 29.04.2025
(51) Int. Cl.: H04W 84/12

(54) **PROTECTED TRIGGER FRAMES IN A WIRELESS NETWORK**

(30) Priority: 29.04.2024 US 202463639925 P; 18.04.2025 US 202519183331
(71) Applicant: Apple Inc., Cupertino, CA 95014 (US)
(72) Inventor: SUN, Yanjun, Cupertino, California, 95014 (US); BATRA, Anuj, Cupertino, California, 95014 (US); KNECKT, Jarkko L., Cupertino, California, 95014 (US); EPSTEIN, Leonid, 4673312 Herzliya, ISRAEL (IL); MYERS, Steven A., Cupertino, California, 95014 (US); ZHANG, Yan, Cupertino, California, 95014 (US); LIU, Yong, Cupertino, California, 95014 (US)
(74) Representative: Simmons & Simmons

(57) **Abstract**

An electronic device that provides a trigger frame is described. This electronic device includes: an antenna node communicatively coupled to an antenna; and an interface circuit, communicatively coupled to the antenna node, that communicates with a second electronic device. During operation the interface circuit receives, associated with the second electronic device, the trigger frame that includes an indication that at least a portion of the trigger frame is protected, and the indication is included in a common information field or a special user information field. Moreover, the trigger frame is compatible with an Institute of Electrical and Electronics Engineers (IEEE) 802.11 standard.

## Description

### FIELD

The described embodiments relate, generally, to wireless communication among electronic devices, including the use of protected trigger frames in wireless network.

### BACKGROUND

Many electronic devices communicate with each other using wireless local area networks (WLANs), such as those based on a communication protocol that is compatible with an Institute of Electrical and Electronics Engineers (IEEE) 802.11 standard (which is sometimes referred to as 'Wi-Fi').

In order to enhance security and reliability of an IEEE 802.11 network, IEEE 802.11bn is adding protection to trigger frames. A protected trigger frame is expected to be frequently used and supported by many electronic devices as in IEEE 802.11ax or IEEE 802.11be. Multiple upcoming IEEE 802.11bn features (such as reduced capability mode, Coexistence, and techniques for coordination among multiple access points) are expected to use trigger frames. Without robust protection of a trigger frame, an attacker can jeopardize a network, such as a WLAN. However, it can be challenging to ensure robust protection of the trigger frames for reliability of the network, while minimizing the size of the trigger frames for efficiency of the network.

### SUMMARY

A second electronic device that provides a trigger frame is described. This second electronic device includes: an antenna node communicatively coupled to an antenna; and an interface circuit, communicatively coupled to the antenna node, that communicates with an electronic device. During operation, the interface circuit provides, addressed to at least the electronic device, a trigger frame, where the trigger frame includes an indication that at least a portion of the trigger frame is protected, and the indication is included in a common information field or a special user information field.

Note that the frame can be compatible with an IEEE 802.11bn standard or an IEEE 802.11mf standard.

Moreover, the second electronic device can include an access point and the electronic device can include a station or client that is associated with the access point.

Furthermore, the second electronic device can negotiate use of the protected trigger frame when the electronic device associates with the second electronic device.

Additionally, the trigger frame can include an initial control frame (ICF). For example, the ICF can include a Multi-User Request to Send (MU-RTS) frame or a Buffer Status Report Poll (BSRP) frame.

In some embodiments, when the trigger frame is different from an ICF, the trigger frame can include a pre-padding field with a packet number (PN) and a message integrity code (MIC), where the pre-padding field is located before a padding field. For example, the pre-padding field can be located after a user information field.

Note that, when the trigger frame comprises an ICF and some stations or clients only support use of a pre-padding frame check sequence (FCS) field, the trigger frame can include: a pre-padding field with a PN and a MIC; and the pre-padding FCS field, where the pre-padding FCS field is located after the pre-padding field and before a padding field. Moreover, 4 bits of the pre-padding FCS field are indicated within an association identifier 12 (AID12) subfield of a user information field and 28 remaining bits of the pad-padding FCS field can be indicated after the AID12 subfield within the user information field. Alternatively or additionally, the pre-padding field can be located after a user information field. In some embodiments, the trigger frame can include another user information field between the pre-padding field and the pre-padding FCS field, where the other user information field is not protected.

Moreover, when the trigger frame includes an ICF and stations or clients support use of a MIC, the trigger frame can include a pre-padding field with a PN and the MIC, where the pre-padding field is located after a user information field and before a padding field.

Furthermore, the indication can be included in a reserved bit in the common information field or the special user information field.

Additionally, the trigger frame can include a key identifier, and the key identifier can be included in the common information field or the special user information field. For example, the key identifier can be included in bits 56-63 of the common information field.

In some embodiments, the trigger frame can include a MIC and the MIC can have a duration of 64 or 96 bits.

Note that the trigger frame can include a key identifier associated with group addressed trigger frame. Moreover, the interface circuit can receive, associated with the electronic device, an Extensible Authentication Protocol (EAP) over Local Area Network (EAPOL)-key request frame, where one or more bits in the EAPOL-key request frame indicate two or more MIC errors have occurred. In response to receiving the EAPOL-key request frame, the second electronic device can: initiate an update of a security key associated with the key identifier; and only provide, until the security key is updated at all recipients of group-addressed trigger frames, trigger frames that are addressed to an individual recipient or insert a first MIC and a second MIC in the group-addressed trigger frames, where the first MIC is associated with the old security key associated with the MIC errors and the second MIC is associated with the updated security key.

Moreover, the trigger frame can include a PN, and the packet number can have 28 or 32 bits. For example, the PN can be included in adjacent first and second user information fields. Furthermore, a MIC can be included in the second user information field and subsequent user information fields after the second user information field. Note that the subsequent user information fields can be located before a pre-padding field. In some embodiments, four bits of the PN are indicated within an AID12 subfield of a user information field and remaining bits of the PN are indicated after the AID12 subfield within the user information field.

Additionally, the trigger frame can include a MIC wherein 4 bits of the MIC can be indicated within an AID12 subfield of a user information field and 28 bits of the MIC can be indicated after the AID12 subfield within the user information field. In some embodiments, one reserved bit can indicate a type of the PN, the MIC or the FCS.

Note that an AID12 subfield indicating part of a PN can be included in a first user information field, second AID12 subfields indicating part of a MIC can be included in second, third and fourth user information fields, and a third AID12 subfield indicating part of a FCS can be included in a fifth user information field.

Moreover, the trigger frame can include a pre-padding field with a MIC, and a start of a padding field duration is determined from a last bit of the pre-padding field.

Furthermore, the trigger frame can include a pre-padding field with a MIC, and a start of the pre-padding FCS field duration can be determined from a last bit of the pre-padding field.

Additionally, the protection can include integrity protection for at least the portion of the trigger frame. For example, the trigger frame can include a MIC and a PN and the MIC and the PN can provide the integrity protection.

In some embodiments, the second electronic device can receive, associated with the electronic device, a response to the trigger frame.

Other embodiments provide the electronic device that performs counterpart operations to at least some of the operations performed by the second electronic device. For example, the second electronic device can include: an antenna node communicatively coupled to an antenna; and an interface circuit, communicatively coupled to the antenna node, that communicates with the electronic device. During operation, the interface circuit receives, associated with the electronic device, a trigger frame, where the trigger frame includes an indication that at least a portion of the trigger frame is protected, and the indication is included in a common information field or a special user information field.

Other embodiments provide an integrated circuit (such as the interface circuit) for use with the electronic device or the second electronic device. The integrated circuit can perform at least some of the aforementioned operations.

Other embodiments provide a computer-readable storage medium for use with the electronic device or the second electronic device. When program instructions stored in the computer-readable storage medium are executed by the electronic device or the second electronic device, the program instructions can cause the electronic device or the second electronic device to perform at least some of the aforementioned operations of the electronic device or the second electronic device.

Other embodiments provide a method. The method includes at least some of the aforementioned operations performed by the electronic device or the second electronic device.

This Summary is provided for purposes of illustrating some exemplary embodiments, so as to provide a basic understanding of some aspects of the subject matter described herein. Accordingly, it will be appreciated that the above-described features are only examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

The included drawings are for illustrative purposes and serve only to provide examples of possible structures and arrangements for the disclosed systems and techniques for intelligently and efficiently managing communication between multiple associated user devices. These drawings in no way limit any changes in form and detail that may be made to the embodiments by one skilled in the art without departing from the spirit and scope of the embodiments. The embodiments will be readily understood by the following detailed description in conjunction with the accompanying drawings, wherein like reference numerals designate like structural elements.
FIG. 1 is a block diagram illustrating an example of communication between electronic devices.
FIG. 2 is a block diagram illustrating an example of communication between electronic devices.
FIG. 3 is a flow diagram illustrating an example method for providing a trigger frame using an electronic device of FIG. 1 or 2.
FIG. 4 is a flow diagram illustrating an example method for receiving a trigger frame using the electronic device of FIG. 1 or 2.
FIG. 5 is a drawing illustrating an example of communication between the electronic devices of FIG. 1 or 2.
FIG. 6 is a drawing illustrating an example of communication between the electronic devices of FIG. 1 or 2.
FIGs. 7A-D are drawings illustrating examples of trigger frame formats.
FIG. 8 is a drawing illustrating an example of a trigger frame format.
FIG. 9 is a drawing illustrating an example of assembly of a frame by an interface circuit in the electronic device of FIG. 1 or 2.
FIG. 10 is a drawing illustrating an example of an extremely high throughput (EHT) variant common information field format.
FIG. 11 is a drawing illustrating an example of assembly of a frame by an interface circuit in the electronic device of FIG. 1 or 2.
FIG. 12 is a drawing illustrating an example of an association identifier 12 (AID12) subfield format.
FIGs. 13-14 are drawings illustrating examples of trigger frame formats.
FIG. 15 illustrates an example of an electronic device of FIG. 1 according to some embodiments of the disclosure.

Note that like reference numerals refer to corresponding parts throughout the drawings. Moreover, multiple instances of the same part are designated by a common prefix separated from an instance number by a dash.

### DETAILED DESCRIPTION

An electronic device (such as an access point) that provides a trigger frame is described. This electronic device includes: an antenna node communicatively coupled to an antenna; and an interface circuit, communicatively coupled to the antenna node, that communicates with a second electronic device. During operation, the interface circuit provides, addressed to the second electronic device, the trigger frame that includes an indication that at least a portion of the trigger frame is protected, where the indication is included in a common information field or a special user information field. Moreover, the frame is compatible with an IEEE 802.11 standard, such as IEEE 802.11bn or IEEE 802.11mf.

Moreover, in a second group of embodiments, a second electronic device (such as a station or client that is associated with the access point) that receives a trigger frame is described. This second electronic device includes: an antenna node communicatively coupled to an antenna; and a second interface circuit, communicatively coupled to the antenna node, that communicates with an electronic device. During operation the second interface circuit receives, associated with the electronic device, the trigger frame that includes an indication that at least a portion of the trigger frame is protected, where the indication is included in a common information field or a special user information field.

By communicating the indication, these communication techniques can efficiently facilitate security for at least a portion of the trigger frame. Moreover, the indication can enhance the reliability of the trigger frame. Consequently, relative to existing communication techniques, the disclosed communication techniques can enhance the robustness of communication between at least the electronic device and the second electronic device. Therefore, the communication techniques can improve the user experience when using the electronic device and/or the second electronic device.

In the discussion that follows, a user can include: an individual, an organization, a company, a governmental agency, a for-profit business entity, a not-for-profit entity, or a group of one or more individuals.

Note that the communication techniques can be used during or with wired or wireless communication between electronic devices in accordance with a communication protocol, such as a communication protocol that is compatible with an IEEE 802.11 standard (which is sometimes referred to as Wi-Fi). However, this communication techniques can also be used with a wide variety of other communication protocols, and in electronic devices (such as portable electronic devices or mobile devices) that can incorporate multiple different radio access technologies (RATs) to provide connections through different wireless networks that offer different services and/or capabilities.

The electronic device and/or the second electronic device can include hardware and software to support a wireless personal area network (WPAN) according to a WPAN communication protocol, such as those standardized by the Bluetooth Special Interest Group and/or those developed by Apple (in Cupertino, California) that are referred to as an Apple Wireless Direct Link (AWDL). Moreover, the electronic device and/or the second electronic device can communicate via: a wireless wide area network (WWAN), a wireless metro area network (WMAN), a WLAN, near-field communication (NFC), a cellular-telephone or data network (such as using a third generation (3G) communication protocol, a fourth generation (4G) communication protocol, e.g., Long Term Evolution or LTE, LTE Advanced (LTE-A), a fifth generation (5G) communication protocol, or other present or future developed advanced cellular communication protocol) and/or another communication protocol. In some embodiments, the communication protocol includes a peer-to-peer communication technique.

The electronic device and/or the second electronic device, in some embodiments, can also operate as part of a wireless communication system, which can include a set of client devices, which can also be referred to as stations or client electronic devices, interconnected to an access point, e.g., as part of a WLAN, and/or to each other, e.g., as part of a WPAN and/or an 'ad hoc' wireless network, such as a Wi-Fi direct connection. In some embodiments, the client device can be any electronic device that is capable of communicating via a WLAN technology, e.g., in accordance with a WLAN communication protocol. Furthermore, in some embodiments, the WLAN technology can include a Wi-Fi (or more generically a WLAN) wireless communication subsystem or radio, and the Wi-Fi radio can implement an IEEE 802.11 technology, such as one or more of: IEEE 802.11a; IEEE 802.11b; IEEE 802.11g; IEEE 802.11-2007; IEEE 802.11n; IEEE 802.11-2012; IEEE 802.11-2016; IEEE 802.11ac; IEEE 802.11ax, IEEE 802.11ba, IEEE 802.11be, IEEE 802.11me, IEEE 802.11bn, IEEE 802.11bx, IEEE 802.11mf or other present or future developed IEEE 802.11 technologies.

Note that the electronic device and/or the second electronic device can use multi-user transmission (such as OFDMA) and/or multiple-input multiple-output (MIMO).

In some embodiments, the electronic device and/or the second electronic device can act as a communications hub that provides access to a WLAN and/or to a WWAN and, thus, to a wide variety of services that can be supported by various applications executing on the electronic device and/or the second electronic device. Thus, the electronic device and/or the second electronic device can include an 'access point' that communicates wirelessly with other electronic devices (such as using Wi-Fi), and that provides access to another network (such as the Internet) via IEEE 802.3 (which is sometimes referred to as 'Ethernet'). Note that the access point can be a physical access point or a virtual or 'software' access point that is implemented on a computer or an electronic device. However, in other embodiments the electronic device and/or the second electronic device may not be an access point.

Additionally, it should be understood that the electronic devices described herein can be configured as multi-mode wireless communication devices that are also capable of communicating via different 3G and/or second generation (2G) RATs. In these scenarios, a multi-mode electronic device or UE can be configured to prefer attachment to LTE networks offering faster data rate throughput, as compared to other 3G legacy networks offering lower data rate throughputs. For example, in some implementations, a multi-mode electronic device is configured to fall back to a 3G legacy network, e.g., an Evolved High Speed Packet Access (HSPA+) network or a Code Division Multiple Access (CDMA) 2000 Evolution-Data Only (EV-DO) network, when LTE and LTE-A networks are otherwise unavailable. More generally, the electronic devices described herein can be capable of communicating with other present or future developed cellular-telephone technologies.

In accordance with various embodiments described herein, the terms 'wireless communication device,' 'electronic device," 'mobile device," 'mobile station,' 'wireless station,' 'wireless access point,' "station," 'access point' and 'user equipment' (UE) can be used herein to describe one or more consumer electronic devices that can be capable of performing procedures associated with various embodiments of the disclosure.

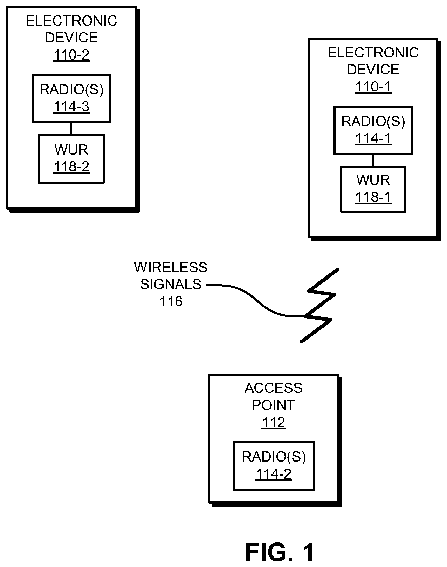

FIG. 1 presents a block diagram illustrating an example of electronic devices communicating wirelessly. Notably, one or more electronic devices 110 (such as a smartphone, a laptop computer, a notebook computer, a tablet, or another such electronic device) and access point 112 can communicate wirelessly in a WLAN using an IEEE 802.11 communication protocol. Thus, electronic devices 110 can be associated with or can have one or more connections with access point 112. For example, electronic devices 110 and access point 112 can wirelessly communicate while: detecting one another by scanning wireless channels, transmitting and receiving beacons or (equivalently) beacon frames on wireless channels, establishing connections (for example, by transmitting connect requests), and/or transmitting and receiving packets or frames (which can include the request and/or additional information, such as data, as payloads). Note that access point 112 can provide access to a network, such as the Internet, via an Ethernet protocol, and can be a physical access point or a virtual or 'software' access point that is implemented on a computer or an electronic device. In the discussion that follows, electronic devices 110 are sometimes referred to as 'clients,' "stations," or 'recipient electronic devices.'

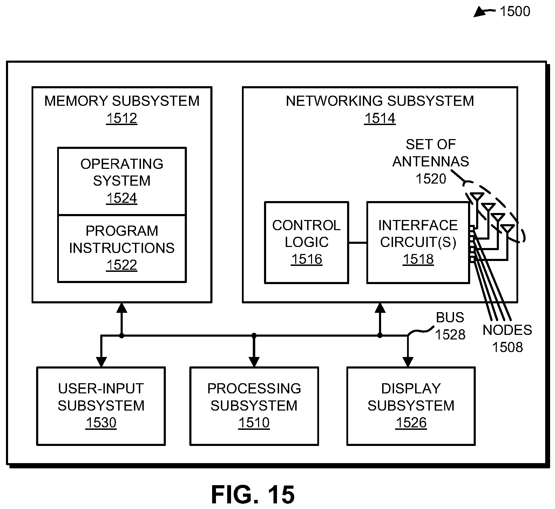

As described further below with reference to FIG. 15, electronic devices 110 and access point 112 can include subsystems, such as a networking subsystem, a memory subsystem, and a processor subsystem. In addition, electronic devices 110 and access point 112 can include radios 114 in the networking subsystems. More generally, electronic devices 110 and access point 112 can include (or can be included within) any electronic devices with networking subsystems that enable electronic devices 110 and access point 112, respectively, to wirelessly communicate with another electronic device. This can include transmitting beacon frames on wireless channels to enable the electronic devices to make initial contact with or to detect each other, followed by exchanging subsequent data/management frames (such as connect requests) to establish a connection, configure security options (e.g., IPSec), transmit and receive packets or frames via the connection, etc.

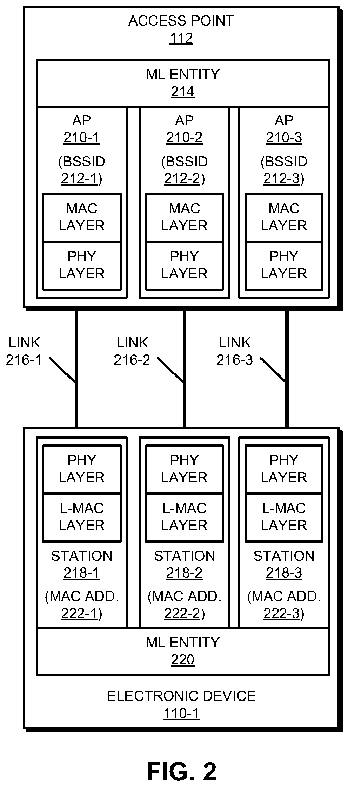

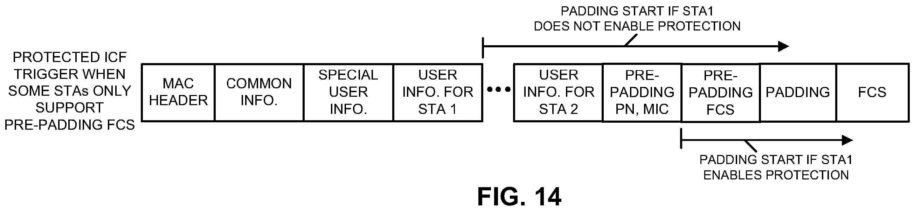

As can be seen in FIG. 1, wireless signals 116 (represented by a jagged line) are communicated by one or more radios 114-1 and 114-2 in electronic device 110-1 and access point 112, respectively. For example, as noted previously, electronic device 110-1 and access point 112 can exchange packets or frames using a Wi-Fi communication protocol in a WLAN. As illustrated further below with reference to FIGs. 2-14, one or more radios 114-1 can receive wireless signals 116 that are transmitted by one or more radios 114-2 via one or more links between electronic device 110-1 and access point 112. Alternatively, the one or more radios 114-1 can transmit wireless signals 116 that are received by the one or more radios 114-2.

In some embodiments, wireless signals 116 are communicated by one or more radios 114 in electronic devices 110 and access point 112, respectively. For example, one or more radios 114-1 and 114-3 can receive wireless signals 116 that are transmitted by one or more radios 114-2 via one or more links between electronic devices 110-1 and 110-2, and access point 112.

Note that the one or more radios 114-1 can consume additional power in a higher-power mode. If the one or more radios 114-1 remain in the higher-power mode even when they are not transmitting or receiving packets or frames, the power consumption of electronic device 110-1 can be needlessly increased. Consequently, electronic devices 110 can include wake-up radios (WURs) 118 that listen for and/or receive wake-up frames (and/or other wake-up communications), e.g., from access point 112. When a particular electronic device (such as electronic device 110-1) receives a wake-up frame, WUR 118-1 can selectively wake-up radio 114-1, e.g., by providing a wake-up signal that selectively transitions at least one of the one or more radios 114-1 from a lower-power mode to the higher-power mode.

IEEE 802.11be has proposed the use of multiple concurrent links between electronic devices, such as access point 112 and one or more of electronic device 110. For example, as shown in FIG. 2, which presents a block diagram illustrating an example of electronic devices communicating wirelessly, access point 112 can be an access point multi-link device (MLD) that includes multiple access points 210, which are cohosted or collocated in access point 112. In the present discussion, 'cohosted' or 'co-located' means that access points 210 are physically or virtually implemented in the same access point MLD, or are affiliated with the same access point MLD. Note that this meaning of 'cohosted' does not indicate that access points 210 have the same primary 20 MHz channel. Access points 210 can have associated basic service set identifiers (BSSIDs) 212, and media access control (MAC) and physical (PHY) layers (including separate radios, which can be included in the same or different integrated circuits). Note that access point 112 can have an ML entity 214 having an MLD MAC address, an ML identifier, a service set identifier (SSID), and that can provide security for access points 210.

Moreover, access points 210 can have different concurrent links 216 in different bands of frequencies (such as a link 216-1 with a link identifier 1 in a 2.4 GHz band of frequencies, a link 216-2 with a link identifier 2 in a 5 GHz band of frequencies and a link 216-3 with a link identifier 3 in a 6 GHz bands of frequencies) with stations 218 in at least electronic device 110-1, which is a non-access point MLD. These stations can have associated lower MAC and PHY layers (including separate radios, which can be included in the same or different integrated circuits). In addition, electronic device 110-1 can have an ML entity 220 having an MLD MAC address.

For example, the access point MLD can have three radios. One radio can operate on a 2.4 GHz band of frequencies, and the other radios can operate on the 5/6 GHz bands of frequencies. The access point MLD can create three access points 210, operating on a 2.4 GHz channel, a 5 GHz channel, and a 6 GHz channel respectively. The three access points 210 can operate independently, each of which has at least one BSS with different BSSIDs 212. (While FIG. 2 illustrates the access point MLD with three access points 210, more generally the access point MLD can include up to 15 access points with one or more access points in a given band of frequencies.) Moreover, each of the access points 210 can accommodate both legacy non-access point stations as well as non-access point MLD stations 218. Furthermore, each of access points 210 can transmit its own beacon frames using its own BSSID. Additionally, the access point MLD can have ML entity 214, identified by an MLD address (such as an MLD MAC address). This MAC address can be used to pair with ML entity 220 of the associated non-access point MLD stations 218.

Moreover, the non-access point MLD station (e.g., electronic device 110-1) can have two or three radios. One radio can operate on a 2.4 GHz band of frequencies, and the other radios can operate on the 5/6 GHz bands of frequencies. When the non-access point MLD establishes a ML association with the access point MLD, it can create up to three stations 218, each of which associates to one of access points 210 within the access point MLD. Each of stations 218 can have a different over-the-air MAC address 222. The non-access point MLD can also have ML entity 220, identified by another MLD address (such as another MLD MAC address). This MLD MAC address can be used to pair with ML entity 214 of the associated access point MLD.

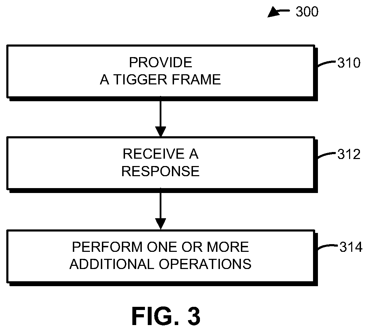

Referring back to FIG. 1, as noted previously, existing communication techniques use unprotected trigger frames. This approach increases security risks and can be unreliable. In order to address these problems, as described further below with reference to FIGs. 3-14, in the communication techniques access point 112 and electronic device 110-1 can selectively use a trigger frame that is, at least in part, protected. Notably, access point 112 can provide, to electronic device 110-1, a trigger frame that includes an indication that at least a portion of the trigger frame is protected, and the indication is included in a common information field or a special user information field. Moreover, the trigger frame can be compatible with an IEEE 802.11 standard, such as IEEE 802.11bn or IEEE 802.11mf. As described further below, electronic device 110-1 can receive the trigger frame.

Then, electronic device 110-1 can provide, to access point 112, a response to the trigger frame.

Note that access point 112 can negotiate use of the protected trigger frame when electronic device 110-1 associates with access point 112.

Moreover, the trigger frame can include an ICF. For example, the ICF can include a MU-RTS frame or a BSRP frame.

In some embodiments, when the trigger frame is different from an ICF, the trigger frame can include a pre-padding field with a PN and a MIC, where the pre-padding field is located before a padding field. For example, the pre-padding field can be located after a user information field.

Note that, when the trigger frame comprises an ICF and some stations or clients (such as electronic device 110-1) only support use of a pre-padding FCS field, the trigger frame can include: a pre-padding field with a PN and a MIC; and the pre-padding FCS field, where the pre-padding FCS field is located after the pre-padding field and before a padding field. Moreover, 4 bits of the pre-padding FCS field are indicated within an AID12 subfield of a user information field and 28 remaining bits of the pad-padding FCS field can be indicated after the AID12 subfield within the user information field. Alternatively or additionally, the pre-padding field can be located after a user information field. In some embodiments, the trigger frame can include another user information field between the pre-padding field and the pre-padding FCS field, where the other user information field is not protected.

Moreover, when the trigger frame includes an ICF and stations or clients (such as electronic device 110-1) support use of a MIC, the trigger frame can include a pre-padding field with a PN and the MIC, where the pre-padding field is located after a user information field and before a padding field.

Furthermore, the indication can be included in a reserved bit in the common information field or the special user information field.

Additionally, the trigger frame can include a key identifier, and the key identifier can be included in the common information field or the special user information field. For example, the key identifier can be included in bits 56-63 of the common information field.

In some embodiments, the trigger frame can include a MIC and the MIC can have a duration of 64 or 96 bits.

Note that the trigger frame can include a key identifier associated with group addressed trigger frame. Moreover, access point 112 can receive, associated with electronic device 110-1, an EAPOL-key request frame, where one or more bits in the EAPOL-key request frame indicate two or more MIC errors have occurred. In response to receiving the EAPOL-key request frame, access point 112 can: initiate an update of a security key associated with the key identifier; and only provide, until the security key is updated at all recipients of group-addressed trigger frames, trigger frames that are addressed to an individual recipient or insert a first MIC and a second MIC in the group-addressed trigger frames, where the first MIC is associated with the old security key associated with the MIC errors and the second MIC is associated with the updated security key.

Moreover, the trigger frame can include a PN, and the packet number can have 28 or 32 bits. For example, the PN can be included in adjacent first and second user information fields. Furthermore, a MIC can be included in the second user information field and subsequent user information fields after the second user information field. Note that the subsequent user information fields can be located before a pre-padding field. In some embodiments, four bits of the PN are indicated within an AID12 subfield of a user information field and remaining bits of the PN are indicated after the AID12 subfield within the user information field.

Additionally, the trigger frame can include a MIC wherein 4 bits of the MIC can be indicated within an AID12 subfield of a user information field and 28 bits of the MIC can be indicated after the AID12 subfield within the user information field. In some embodiments, one reserved bit can indicate a type of the PN, the MIC or the FCS.

Note that an AID12 subfield indicating part of a PN can be included in a first user information field, second AID12 subfields indicating part of a MIC can be included in second, third and fourth user information fields, and a third AID12 subfield indicating part of a FCS can be included in a fifth user information field.

Moreover, the trigger frame can include a pre-padding field with a MIC, and a start of a padding field duration is determined from a last bit of the pre-padding field.

Furthermore, the trigger frame can include a pre-padding field with a MIC, and a start of the pre-padding FCS field duration can be determined from a last bit of the pre-padding field.

Additionally, the protection can include integrity protection for at least the portion of the trigger frame. For example, the trigger frame can include a MIC and a PN and the MIC and the PN can provide the integrity protection.

In summary, the disclosed communication techniques can facilitate the selective use of a trigger frame that is at least partially protected during communication between access point 112 and electronic device 110-1. This capability can allow access point 112 and electronic device 110-1 to efficiently and securely communicate the trigger frame, which can enhance the robustness and reliability of communication between access point 112 and electronic device 110-1. Therefore, the communication techniques can improve the user experience and customer satisfaction.

While the preceding discussion illustrated use of the instance of the trigger frame by access point 112, in other embodiments the roles of access point 112 and electronic device 110-1 can be reversed in the communication techniques.

Note that access point 112 and one or more electronic devices (such as electronic devices 110-1 and/or 110-2) can be compatible with an IEEE 802.11 standard that includes trigger-based channel access (such as IEEE 802.11ax). However, access point 112 and the one or more electronic devices can also communicate with one or more legacy electronic devices that are not compatible with the IEEE 802.11 standard (i.e., that do not use multi-user trigger-based channel access). In some embodiments, access point 112 and the one or more electronic devices use multi-user transmission (such as OFDMA). For example, the one or more radios 114-2 can provide one or more trigger frames for the one or more electronic devices. Moreover, in response to receiving the one or more trigger frames, the one or more radios 114-1 can provide one or more group or block acknowledgments to the one or more radios 114-2. For example, the one or more radios 114-1 can provide the one or more group acknowledgments during associated assigned time slot(s) and/or in an assigned channel(s) in the one or more group acknowledgments. However, in some embodiments one or more of electronic devices 110 can individually provide acknowledgments to the one or more radios 114-2. Thus, the one or more radios 114-1 (and, more generally, radios 114 in the electronic devices 110-1 and/or 110-2) can provide one or more acknowledgments to the one or more radios 114-2.

In the described embodiments, processing a packet or frame in one of electronic devices 110 and access point 112 includes: receiving wireless signals 116 encoding a packet or a frame; decoding/extracting the packet or frame from received wireless signals 116 to acquire the packet or frame; and processing the packet or frame to determine information contained in the packet or frame (such as data in the payload).

In general, the communication via the WLAN in the communication techniques can be characterized by a variety of communication-performance metrics. For example, the communication-performance metric can include any/all of: an RSSI, a data rate, a data rate for successful communication (which is sometimes referred to as a 'throughput'), a latency, an error rate (such as a retry or resend rate), a mean-square error of equalized signals relative to an equalization target, inter-symbol interference, multipath interference, a signal-to-noise ratio (SNR), a width of an eye pattern, a ratio of a number of bytes successfully communicated during a predetermined or predefined time interval (such as a time interval between, e.g., 1 and 10 s) to an estimated maximum number of bytes that can be communicated in the predetermined or predefined time interval (the latter of which is sometimes referred to as the 'capacity' of a communication channel or link), and/or a ratio of an actual data rate to an estimated data rate (which is sometimes referred to as 'utilization').

Although we describe the network environment shown in FIG. 1 as an example, in alternative embodiments, different numbers and/or types of electronic devices can be present. For example, some embodiments can include more or fewer electronic devices. As another example, in other embodiments, different electronic devices can be transmitting and/or receiving packets or frames. In some embodiments, multiple links can be used during communication between electronic devices 110. Consequently, one of electronic devices 110 can perform operations in the communication techniques.

FIG. 3 presents a flow diagram illustrating an example method 300 for providing a trigger frame. This method can be performed by a second electronic device, such as access point 112 in FIG. 1. For example, method 300 can be implemented by an interface circuit in access point 112 in FIG. 1. Note that the communication between the second electronic device and an electronic device (such as electronic device 110-1 in FIG. 1, which can be a station or client that is associated with access point 112) can be compatible with an IEEE 802.11 communication protocol.

During operation, the second electronic device provides, addressed to the electronic device, the trigger frame (operation 310) that includes an indication that at least a portion of the trigger frame is protected, and the indication is included in a common information field or a special user information field. Moreover, the trigger frame is compatible with an IEEE 802.11 standard.

Then, the second electronic receives, associated with the electronic device, a response (operation 312) to the trigger frame.

In some embodiments, the second electronic device can optionally perform one or more additional operations (operation 314). For example, the second electronic device can negotiate use of the protected trigger frame when the electronic device associates with the second electronic device.

Additionally, the trigger frame can include an ICF. For example, the ICF can include a MU-RTS frame or a BSRP frame.

In some embodiments, when the trigger frame is different from an ICF, the trigger frame can include a pre-padding field with a packet number (PN) and a message integrity code (MIC), where the pre-padding field is located before a padding field. For example, the pre-padding field can be located after a user information field.

Note that, when the trigger frame comprises an ICF and some stations or clients only support use of a pre-padding FCS field, the trigger frame can include: a pre-padding field with a PN and a MIC; and the pre-padding FCS field, where the pre-padding FCS field is located after the pre-padding field and before a padding field. Moreover, 4 bits of the pre-padding FCS field are indicated within an AID12 subfield of a user information field and 28 remaining bits of the pad-padding FCS field can be indicated after the AID12 subfield within the user information field. Alternatively or additionally, the pre-padding field can be located after a user information field. In some embodiments, the trigger frame can include another user information field between the pre-padding field and the pre-padding FCS field, where the other user information field is not protected.

Moreover, when the trigger frame includes an ICF and stations or clients support use of a MIC, the trigger frame can include a pre-padding field with a PN and the MIC, where the pre-padding field is located after a user information field and before a padding field.

Furthermore, the indication can be included in a reserved bit in the common information field or the special user information field.

Additionally, the trigger frame can include a key identifier, and the key identifier can be included in the common information field or the special user information field. For example, the key identifier can be included in bits 56-63 of the common information field.

In some embodiments, the trigger frame can include a MIC and the MIC can have a duration of 64 or 96 bits.

Note that the trigger frame can include a key identifier associated with group addressed trigger frame. Moreover, the second electronic device can receive, associated with the electronic device, an EAPOL-key request frame, where one or more bits in the EAPOL-key request frame indicate two or more MIC errors have occurred. In response to receiving the EAPOL-key request frame, the second electronic device can: initiate an update of a security key associated with the key identifier; and only provide, until the security key is updated at all recipients of group-addressed trigger frames, trigger frames that are addressed to an individual recipient or insert a first MIC and a second MIC in the group-addressed trigger frames, where the first MIC is associated with the old security key associated with the MIC errors and the second MIC is associated with the updated security key.

Moreover, the trigger frame can include a PN, and the packet number can have 28 or 32 bits. For example, the PN can be included in adjacent first and second user information fields. Furthermore, a MIC can be included in the second user information field and subsequent user information fields after the second user information field. Note that the subsequent user information fields can be located before a pre-padding field. In some embodiments, four bits of the PN are indicated within an AID12 subfield of a user information field and remaining bits of the PN are indicated after the AID12 subfield within the user information field.

Additionally, the trigger frame can include a MIC wherein 4 bits of the MIC can be indicated within an AID12 subfield of a user information field and 28 bits of the MIC can be indicated after the AID12 subfield within the user information field. In some embodiments, one reserved bit can indicate a type of the PN, the MIC or the FCS.

Note that an AID12 subfield indicating part of a PN can be included in a first user information field, second AID12 subfields indicating part of a MIC can be included in second, third and fourth user information fields, and a third AID12 subfield indicating part of a FCS can be included in a fifth user information field.

Moreover, the trigger frame can include a pre-padding field with a MIC, and a start of a padding field duration is determined from a last bit of the pre-padding field.

Furthermore, the trigger frame can include a pre-padding field with a MIC, and a start of the pre-padding FCS field duration can be determined from a last bit of the pre-padding field.

Additionally, the protection can include integrity protection for at least the portion of the trigger frame. For example, the trigger frame can include a MIC and a PN and the MIC and the PN can provide the integrity protection.

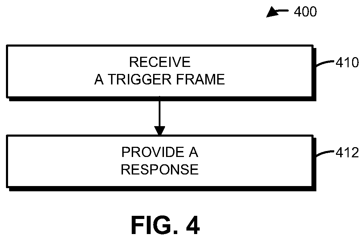

FIG. 4 presents a flow diagram illustrating an example method 400 for receiving a trigger frame. This method can be performed by an electronic device, such as electronic device 110-1 in FIG. 1 (which can be a station or client that is associated with access point 112). For example, method 300 can be implemented by an interface circuit in electronic device 110-1 in FIG. 1. Note that the communication between the electronic device and a second electronic device (such as access point 112 in FIG. 1) can be compatible with an IEEE 802.11 communication protocol.

During operation, the electronic device receives, associated with the second electronic device, the trigger frame (operation 410) that includes an indication that at least a portion of the trigger frame is protected, and the indication is included in a common information field or a special user information field. Moreover, the trigger frame is compatible with an IEEE 802.11 standard.

Then, the electronic provides, addressed to the second electronic device, a response (operation 412) to the trigger frame.

In some embodiments of methods 300 (FIG. 3), and/or 400, there can be additional or fewer operations. Further, one or more different operations can be included. Moreover, the order of the operations can be changed, and/or two or more operations can be combined into a single operation or performed at least partially in parallel.

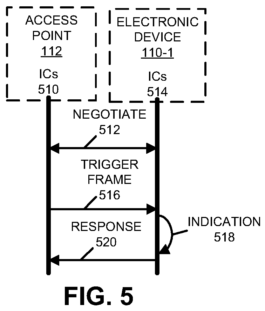

The communication techniques are further illustrated in FIG. 5, which presents a flow diagram illustrating an example of communication between electronic device 110-1 and access point 112. During operation, one or more interface circuits (or interface circuitry) 510 in access point 112 may, during association with electronic device 110-1, negotiate 512 with one or more interface circuits (or interface circuitry) 514 in electronic device 110-1 use of a trigger frame 516 that is, at least in part, protected.

Then, the one or more interface circuits 510 can provide, to electronic device 110-1, trigger frame 516 that includes an indication 518 that at least a portion of trigger frame 516 is protected, and indication 518 is included in a common information field or a special user information field. After receiving trigger frame 516, the one or more interface circuits 514 can provide a response 520 to access point 112.

While communication between the components in FIG. 5 is illustrated with unilateral or bilateral communication (e.g., lines having a single arrow or dual arrows), in general a given communication operation can be unilateral or bilateral. Moreover, while operations in FIG. 5 are illustrated as being sequential, in some embodiments at least some of the operations can be performed in parallel.

We now further describe embodiments of the disclosed communication techniques. As noted previously, existing communication techniques typically use unprotected trigger frames. In order to increase security and reliability of communication, the disclosed communication techniques can use a trigger frame, which is, at least in part, protected.

The disclosed communication techniques propose solutions for the providing robust protection of trigger frames, while minimizing the size of the trigger frame. Notably, the communication techniques can: indicate whether a trigger frame is protected; define where to indicate a key identifier (or a security key) used by the transmitter and/or receiver(s); define a length of the pre-padding MIC; define a length and where to place a PN; define how to efficiently encode the pre-padding PN, MIC and FCS; and specify how to indicate the start of the padding.

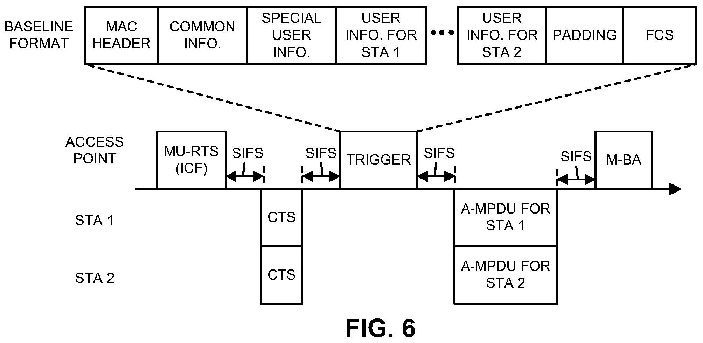

As shown in FIG. 6, which presents a drawing illustrating an example of communication between the electronic devices of FIG. 1 or 2. Notably, FIG. 6 presents examples of frame exchange with two trigger frames. Note that initial control frames (such as MU-RTS and/or a BSRP) can be transmitted in a non-high throughput (HT) duplicate physical layer protocol data unit (PPDU) with a maximum rate of 24 Mbps. Moreover, other trigger frames can be transmitted in ultra-high reliability (UHR) PPDUs at much higher rates. In general, the disclosed communication techniques can be used with some or all trigger-frames types. In some embodiments, the MAC header subfield can have a length of 16 bytes, the common information subfield can have a length of 8 bytes, the special user information subfield can have a length of 0 or approximately 5 bytes, the user information subfield for STA 1 can have a length of approximately 5 bytes, the user information subfield for STA 2 can have a length of approximately 5 bytes, the padding can have a variable length, and the FCS can have a length of 4 bytes. In FIG. 6 and the discussion that follows, the numerical values below the fields in the frames indicate examples of numbers of octets.

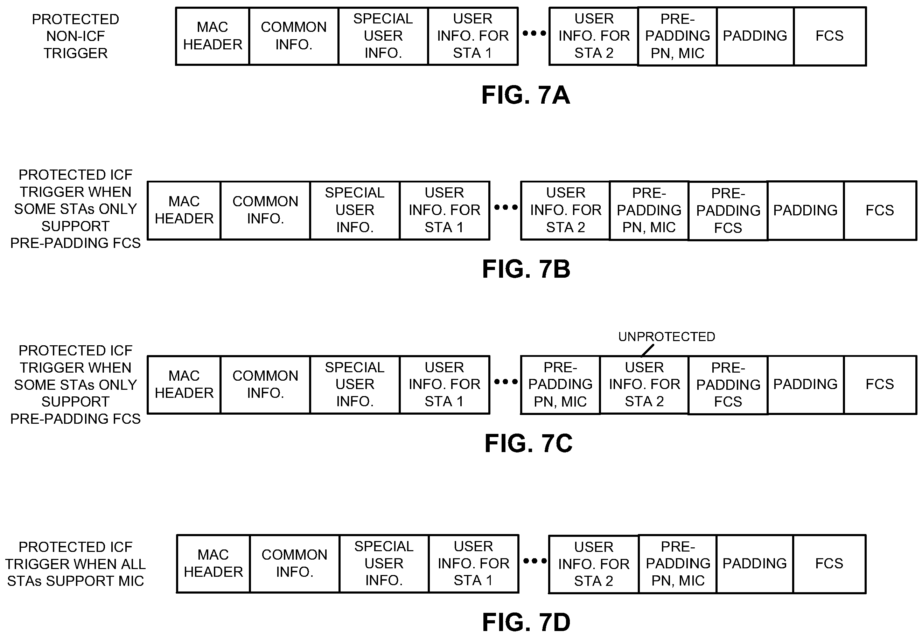

Furthermore, as shown in FIGs. 7A-D, which present drawings illustrating examples of trigger frame formats with protection, e.g., in IEEE 802.11bn or IEEE 802.11mf. A trigger frame can be addressed to one or more electronic devices, each of which is identified using a user information field in the trigger frame. Notably, FIGs. 7A-D shows: a protected non- ICF trigger frame (with a pre-padding PN and MIC); a protected ICF when some of the addressed stations in the user information list only support pre-padding FCS (with a pre-padding PN and MIC, and a pre-padding FCS); a protected ICF when some of the addressed stations in the user information list only support pre-padding FCS (with a pre-padding PN and MIC, and a pre-padding FCS); and protected ICF when all stations support the use of the MIC (with a pre-padding PN and MIC). In FIGs. 7A-D, note that the MAC header subfield can have a length of 16 bytes, the common information subfield can have a length of 8 bytes, the special user information subfield can have a length of 0 or approximately 5 bytes, the user information subfield for STA 1 can have a length of approximately 5 bytes, the user information subfield for STA 2 can have a length of approximately 5 bytes, the pre-padding PN and MIC can have a length of approximately 15, 20 or 25 bytes, the pre-padding FCS can have a length of approximately 5 or 10 bytes, the padding can have a variable length, and the FCS can have a length of 4 bytes.

In some embodiments, the MIC and/or PN can be located before the padding in a trigger frame. This positioning can allow the coding engine to immediately start decoding when the MIC and/or PN are received. Alternatively, if the MIC and/or PN are located at or near the front of a trigger frame (such as after the common information or special user information and before the user information for station 1, there can be a delay in processing, which can require additional padding.

FIGs. 7A-D present different format options for frames depending on whether protected trigger frames are supported. For example, when an access point supports a protected trigger frame (such as in a beacon or a probe response), a station will indicate its ability to use a protected trigger frame during association or re-association with the access point. Note that additional fields will not be protected, and other fields in a frame will also use plain text. In some embodiments, the MIC and PN can provide integrity protection (e.g., when supported, the MIC can function like a checksum). Thus, the protection can be used by a true transmitter or receiver.

In some embodiments, there can be one or more additional user information fields after the pre-padding PN and MIC. These additional user information fields can be unprotected for stations that do not use or support a protected trigger frame (such as integrity protection). Note that the pre-padding FCS can be unprotected. Fields preceding or before the MIC can be protected. This can allow a receiver to validate the field contents for errors in protected fields (e.g., using a checksum) and to switch radio(s) (e.g., from low power to full power). In some other embodiments, the padding field may not be present.

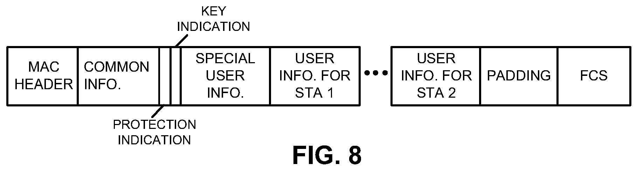

Moreover, FIG. 8 presents a drawing illustrating an example of a trigger frame format. This trigger frame can include a common information field or a special user information field that can be used to indicate protection of a trigger frame. For example, a reserved bit can be used in the common information or special user information field for the indication. The special user information field can be the one defined in IEEE 802.11be or a new special user information field defined in IEEE 802.11bn or IEEE 802.11mf. This approach has less concern about backward compatibility, because it can be risky to redefine the protected frame subfield in a frame control field. In some embodiments, the common information field may include a key indication to the right of the protection indication.

Note that, in order to help a receiver start MIC decoding early, it can be better to place the indication early in the trigger frame. This can be the case for an ICF frame (such as a MU-RTS or BSRP) in order to allow a decoder to start at least 4 µs earlier, which can help reduce a size of the padding. Moreover, placing the indication in the common Information can be a better choice, because the special user information field may not be present (e.g., for a non-punctured 160 MHz transmission). In some embodiments, including the indication in the common information (as opposed to a bit in the special user information field) can result in a 4 µs time saving. In FIG. 8, the MAC header subfield can have a length of 16 bytes, the common information subfield can have a length of 8 bytes, and the special user information subfield can have a length of 0 or approximately 5 bytes. Moreover, the MAC header subfield and the common information subfield can be communicated using two OFDMA symbols at 24 Mbps.

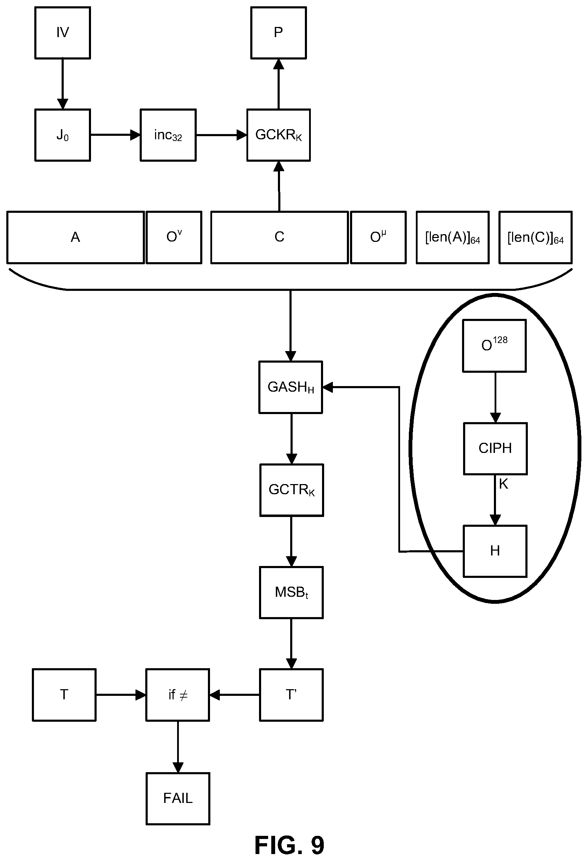

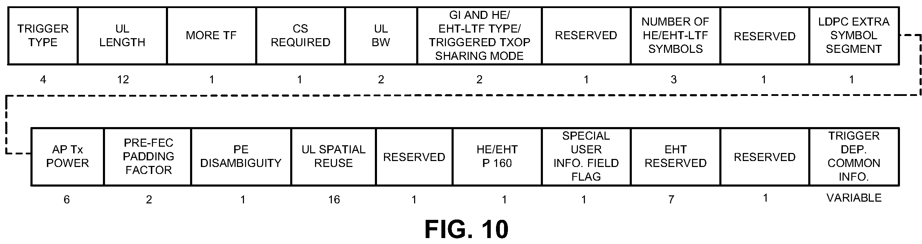

FIG. 9 presents a drawing illustrating an example of assembly of a frame by an interface circuit in the electronic device of FIG. 1 or 2. Moreover, FIG. 10 presents a drawing illustrating an example of an extremely high throughput (EHT) variant common information field format (illustrative values for the number of bits used for each subfield are also shown in FIG. 10). As shown in FIG. 10, a baseline specification can use two values (e.g., '0' and '1') for the key identifier for individually address frames. This approach can avoid ambiguity (e.g., a transmitter and receiver using different keys because of software delay) during the re-keying process. In some embodiments, the key identifier can include at least one bit in the common information or special user information field. The special user information field can be the one defined in IEEE 802.11be or a new special user information field defined in IEEE 802.11bn or IEEE 802.11mf. Moreover, the key identifier can be included as early as possible in the frame, because MIC decoding cannot start without the key identifier. Note that it can be better to have the key identifier in the common Information field, because a 160 MHz ICF may not contain the special user Information field.

In some embodiments, the key identifier can be indicated using reserved bits in the common information field. For example, B56-B63 are reserved for both high efficiency (HE) and EHT. These can be suitable candidate locations for the key identifier. For example, a default for the key identifier can be at least one bit, such as bit 56 and/or bit 57. Note that bit 57 can be interpreted in at least two ways. Moreover, B22, B26 and B53 are only reserved for EHT, which can also be used to indicate the key identifier.

Furthermore, as shown in FIG. 6, design principles can include: needing a robust MIC for reliability; and reducing overhead by minimizing the MIC size. In general, short tags (e.g., 64-bit) can be used only in special circumstances (such as during rekeying in response to an authenticator receiving an EAPOL-key request frame). For example, a station can be recommended to report repeated MIC errors to an access point so that the access point can roll the key. However, the access point can only be recommended to roll the key for group-addressed frames in baseline, as it can be time consuming to update the key identifier for all stations. This can make it complicated to ensure security for group-address frames, such as MU-RTS or BSRP. In some embodiments, a 96-bit MIC defined in NIST guidelines (Publication 800-38D) can be used. However, there may not be a need to worry about the NIST guidelines on short tags, at the cost of approximately 8 µs extra overhead compared to a 64-bit MIC in the worst case. Thus, the pre-padding MIC field can include a 64-bit or a 96-bit MIC.

When a 64-bit MIC is used, there can be vulnerabilities, e.g., for IEEE 802.11bn. Notably, in some embodiments, a 64-bit MIC can be used. However, there can be special considerations in these embodiments. For example, the receiver can log authentication errors internally (in a way which is undetectable from side-channel information) and terminate the connection or notify the user when the percentage of errors exceeds what would be considered normal.

Alternatively or additionally, the 64-bit MIC can be used with enhancements, such as: on the station-side, send an Extensible Authentication Protocol (EAP) over Local Area Network (EAPOL)-key request frame when repeated MIC errors are detected (which can indicate a possible attacker). This can frame can request a key change. Reserved bits in the frame can be redefined to indicate the repeated errors. Note that upon receiving this frame in baseline, an access point must rekey the key for unicast frames and should rekey for broadcast frames. On the access-point side, the following new rules can be added for group-addressed frames, because the access points is not required to change the key in baseline.

In some embodiments, an access point can be mandated to only use individually addressed protected control frame until the key is updated (e.g. define and use individually addressed MU-RTS). Alternatively or additionally, the access point can be mandated to insert two MICs (e.g., in a group-addressed trigger frame) until a new key is deployed to all stations, one using the old key and the other using the new key. This enables the stations to gradually transition to the new key.

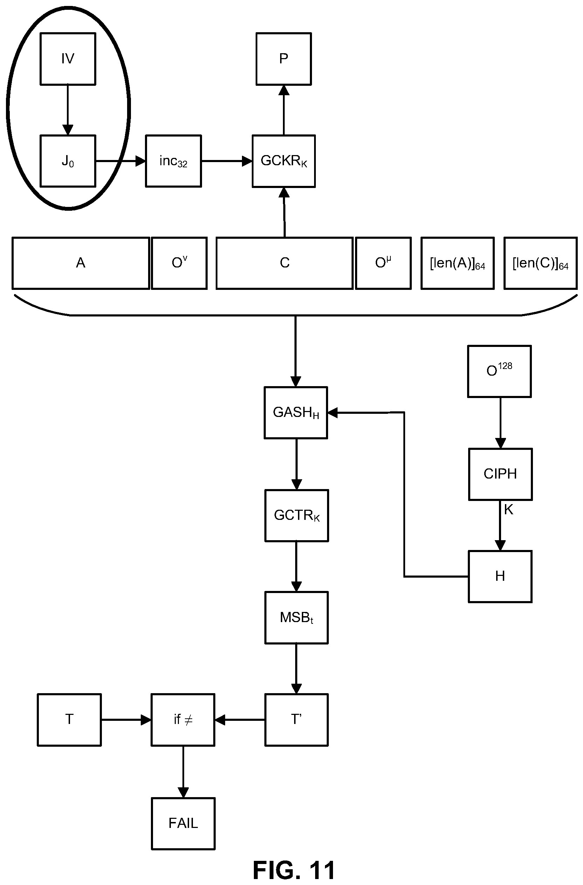

Additionally, as shown in FIG. 11, which presents a drawing illustrating an example of assembly of a frame by an interface circuit in the electronic device of FIG. 1 or 2, assuming one PN is consumed every 250 µs, a PN of four octets provides an approximately 300 hr. rekey interval (notably, 2³²/(1/0.00025)/3600). In some embodiments, a 28-bit PN can be used, which allow a rekey interval of hours. Note that an interface circuit can use PN placement towards the end of decoding. Consequently, the placement can be flexible.

The communication techniques can be modular. Thus, in some embodiments, related information can be kept together in a protected trigger frame. For example, the PN can be next to the MIC (such as placing the PN before the MIC).

In some embodiments, a four-octet PN is used. However, the PN can include 28 or 32 bits. Moreover, the PN can be placed before the MIC in back-to-back user information fields and before the pre-padding FCS. For example, the PN can be included in the payload portion of a user information field. Alternatively, when needed, multiple user-information fields can be used. For example, a special value can be used for the AID12 field to indicate that the associated user information field is used to carry the PN. Notably, AID12 can have a special value in the first 12 bits, and the 28 bits can indicate or convey: the first 28 bits of the PN; the last four bits of the PN and the first 24 bits of the MIC; or the following 28 bits of the MIC.

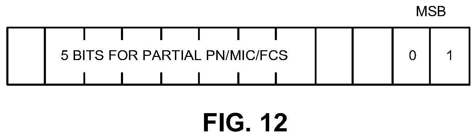

As shown in FIG. 12, which presents a drawing illustrating an example of an AID12 subfield format, the pre-padding PN, the MIC and the FCS fields can add up to approximately 35 octets of extra overhead. For example, using a four-octet PN and 12-octet MIC (e.g., in five user information fields) and a four-octet FCS (e.g., in two user information fields) can equivalent to approximately 48 µs of extra airtime at 6 Mbps. The four-octet FCS can be used to validate the contents of the trigger frame from the beginning until the start of the FCS field.

Notably, the reserved bits in the AID12 subfield can be used to carry or convey parts of the PN, the MIC and the FCS. For example, the most-significant bit (MSB) in AID12 can be set to '1' and an adjacent bit of AID12 can be set to '0'.

Note that legacy stations can ignore the user information field, leaving 10 bits to be redefined. Only five bits may be needed for the PN, the MIC and/or the FCS: four bits can be used for content and one bit for type. In some embodiments, when four bits are borrowed for the AID12 field (e.g., the reserved space can be used), the packing can be more efficient. This approach can result in approximately 10 octets of savings (or 30%). Moreover, in some embodiments, one user information field can be used for the PN, three user information fields can be used for the MIC if the MIC is 12 octets, and one user information field can be used for the FCS. If the MIC is 8 octets, two user information fields can be used for the MIC.

In some embodiments, the AID12 subfield encoding can include: '0' to indicate that the user information field allocates one or more contiguous resource allocation (RA)-resource units (RUs) for associated stations; '1'-'2007' to indicate that the user information field is addressed to an associated station whose AID is equal to the value in the AID12 subfield; '2008'-'2044' can be reserved; '2045' to indicate that the user information field allocates one or more contiguous RA-RUs for associated stations; '2046' to indicate an unallocated RU; '2047'-'4094' can be reserved; and '4095' to indicate disallowed in a user information field because it indicates a start of the padding field. Note that the padding field, when present in a trigger frame, can be a field with all the padding bits set to '1'. The padding field, when present, can have a length of at least two octets and can be located between the user information list field and the FCS field.

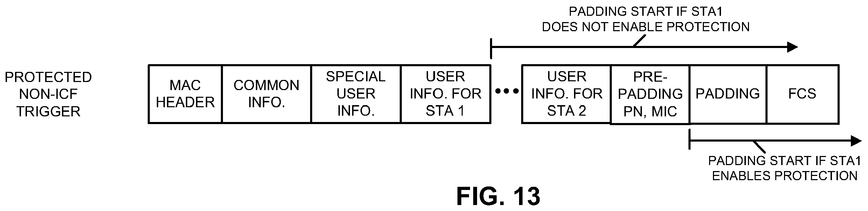

Furthermore, as shown in FIGs. 13-14, which present drawings illustrating examples of trigger frame formats, in baseline, the start of the padding duration for a station can be from the last bit of the user info field of the station. This is because preparation for the response and the enhanced multilink single-radio (eMLSR) switch (e.g., between bands of frequencies) can commence or get started after the station decodes its user info field. In UHR, the MIC can be placed later in the trigger frame. Therefore, a definition of UHR padding can take this into account. For example, when a pre-padding MIC is present for an addressed UHR station, the start of the padding duration for the station can be from the last bit of the pre-padding MIC. Otherwise, the start of the padding duration can be the same as that in EHT.

Thus, the padding requirement can be adjusted based at least in part on a new rule, but without a format change. Notably, a station can check integrity of a trigger frame after the MIC is received. When the station is a UHR station, pre-padding FCS can be added after the MIC. Alternatively, when the station does not support protection (e.g., the station does not support the use of the MIC), but the station wants to perform an integrity check, pre-padding FCS can be added to a trigger frame. Note that the padding can be defined by the station during association with an access point.

In some embodiments of the communication techniques, the indication of a protected trigger frame and/or the key identifier can be in the common information field and/or the special user information field. Moreover, the pre-padding PN and/or MIC field can be after the user information field for station two. Furthermore, the pre-padding FCS for an ICF can be after the pre-padding PN and/or MIC field and before the padding field.

Additionally, when an authenticator receives an EAPOL-key request frame with a key type of pairwise and the authenticator is not currently performing a 4-way handshake with a supplicant, the authenticator can perform pairwise transient key (PTK) rekeying by initiating a 4-way handshake with the supplicant. Moreover, when the authenticator receives an EAPOL-key request frame with a key type of group and the authenticator is not currently performing group temporary key (GTK) rekeying, the authenticator can perform GTK rekeying. GTK rekeying can include: generating a new GTK with a new key identifier; and initiating a group key handshake with each supplicant. Table 1 provides an EAPOL-key PDU format, and Table 2 provides a key information bit format.

**Table 1.**

| Protocol Version (e.g., approximately 1 octet) | Packet Type (e.g., approximately 1 octet) | | Packet Body Length (e.g., approximately 2 octets) |
|---|---|---|---|
| Descriptor Type (e.g., approximately 1 octet) | | | |
| Key Information (e.g., approximately 2 octets) | | Key Length (e.g., approximately 2 octets) | |
| Key Replay Counter (e.g., approximately 8 octets) | | | |
| Key Nonce (e.g., approximately 32 octets) | | | |
| EAPOL-key IV (e.g., approximately 16 octets) | | | |
| RSC (e.g., approximately 8 octets) | | | |
| Reserved (e.g., approximately 8 octets) | | | |
| Key MIC (e.g., a variable length) | | | |
| Key Data Length (e.g., approximately 2 octets) | | Key Data (e.g., approximately N octets, where N is an integer) | |

**Table 2.**

| **Bit(s)** | **Sub-Field** |
|---|---|
| B0-B2 | Key Descriptor Version |
| B3 | Key Type |
| B4-B5 | Reserved |
| B6 | Install |
| B7 | Key Acknowledgement |
| B8 | Key MIC Present |
| B9 | Secure |
| B10 | Error |
| B11 | Request |
| B12 | Encrypted Key Data |
| B13-B15 | Reserved |

In some embodiments, the communication techniques can be implemented in a physical layer and/or a MAC layer.

Note that the formats of packets or frames communicated during the communication techniques can include more or fewer bits, subfields or fields. Alternatively or additionally, the position of information in these packets or frames can be changed. Thus, the order of the subfields or fields can be changed.

While the preceding embodiments illustrate embodiments of the communication techniques using frequency sub-bands, in other embodiments the communication techniques can involve the concurrent use of different temporal slots, and/or or a combination of different frequency sub-bands, different frequency bands and/or different temporal slots. In some embodiments, the communication techniques can use OFDMA.

Moreover, while the preceding embodiments illustrated the use of Wi-Fi during the communication techniques, in other embodiments of the communication techniques Bluetooth or Bluetooth Low Energy is used to communicate at least a portion of the information in the communication techniques. Furthermore, the information communicated in the communication techniques can be communicated or can occur in one or more frequency bands, including: 900 MHz, a 2.4 GHz frequency band, a 5 GHz frequency band, a 6 GHz frequency band, a 60 GHz frequency band, a Citizens Broadband Radio Service (CBRS) frequency band, a band of frequencies used by LTE or another data communication protocol, etc.

As described herein, aspects of the present technology can include the gathering and use of data available from various sources, e.g., to improve or enhance functionality. The present disclosure contemplates that in some instances, this gathered data can include personal information data that uniquely identifies or can be used to contact or locate a specific person. Such personal information data can include demographic data, location-based data, telephone numbers, email addresses, Twitter ID's, home addresses, data or records relating to a user's health or level of fitness (e.g., vital signs measurements, medication information, exercise information), date of birth, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data can be governed by federal and/or state laws, such as the Health Insurance Portability and Accountability Act (HIPAA); whereas health data in other countries can be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configurable to allow users to selectively "opt in" or "opt out" of participation in the collection of personal information data, e.g., during registration for services or anytime thereafter. In addition to providing "opt in" and "opt out" options, the present disclosure contemplates providing notifications relating to the access or use of personal information. For instance, a user can be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification can be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure can broadly cover use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

We now describe embodiments of an electronic device. FIG. 15 presents a block diagram of an electronic device 1500 (which can be a cellular telephone, a smartwatch, an access point, a wireless speaker, an IoT device, another electronic device, etc.) in accordance with some embodiments. This electronic device includes processing subsystem 1510, memory subsystem 1512 and networking subsystem 1514. Processing subsystem 1510 includes one or more devices configured to perform computational operations. For example, processing subsystem 1510 can include one or more microprocessors, application-specific integrated circuits (ASICs), microcontrollers, graphics processing units (GPUs), programmable-logic devices, and/or one or more digital signal processors (DSPs).

Memory subsystem 1512 includes one or more devices for storing data and/or instructions for processing subsystem 1510, and/or networking subsystem 1514. For example, memory subsystem 1512 can include dynamic random access memory (DRAM), static random access memory (SRAM), a read-only memory (ROM), flash memory, and/or other types of memory. In some embodiments, instructions for processing subsystem 1510 in memory subsystem 1512 include: program instructions or sets of instructions (such as program instructions 1522 or operating system 1524), which can be executed by processing subsystem 1510. For example, a ROM can store programs, utilities or processes to be executed in a nonvolatile manner, and DRAM can provide volatile data storage, and can store instructions related to the operation of electronic device 1500. Note that the one or more computer programs can constitute a computer-program mechanism, a computer-readable storage medium or software. Moreover, instructions in the various modules in memory subsystem 1512 can be implemented in: a high-level procedural language, an object-oriented programming language, and/or in an assembly or machine language. Furthermore, the programming language can be compiled or interpreted, e.g., configurable or configured (which can be used interchangeably in this discussion), to be executed by processing subsystem 1510. In some embodiments, the one or more computer programs are distributed over a network-coupled computer system so that the one or more computer programs are stored and executed in a distributed manner.

In addition, memory subsystem 1512 can include mechanisms for controlling access to the memory. In some embodiments, memory subsystem 1512 includes a memory hierarchy that includes one or more caches coupled to a memory in electronic device 1500. In some of these embodiments, one or more of the caches is located in processing subsystem 1510.

In some embodiments, memory subsystem 1512 is coupled to one or more high-capacity mass-storage devices (not shown). For example, memory subsystem 1512 can be coupled to a magnetic or optical drive, a solid-state drive, or another type of mass-storage device. In these embodiments, memory subsystem 1512 can be used by electronic device 1500 as fast-access storage for often-used data, while the mass-storage device is used to store less frequently used data.

Networking subsystem 1514 includes one or more devices configured to couple to and communicate on a wired and/or wireless network (i.e., to perform network operations), such as: control logic 1516, one or more interface circuits (or interface circuitry) 1518 and a set of antennas 1520 (or antenna elements) in an adaptive array that can be selectively turned on and/or off by control logic 1516 to create a variety of optional antenna patterns or 'beam patterns.' Alternatively, instead of the set of antennas, in some embodiments electronic device 1500 includes one or more nodes 1508, e.g., a pad or a connector, which can be coupled to the set of antennas 1520. Thus, electronic device 1500 may or may not include the set of antennas 1520. For example, networking subsystem 1514 can include a Bluetooth^{™} networking system, a cellular networking system (e.g., a 3G/4G/5G network such as UMTS, LTE, etc.), a universal serial bus (USB) networking system, a networking system based on the standards described in IEEE 802.12 (e.g., a Wi-Fi^{®} networking system), an Ethernet networking system, and/or another networking system.

In some embodiments, networking subsystem 1514 includes one or more radios, such as a wake-up radio that is used to receive wake-up frames and wake-up beacons, and a main radio that is used to transmit and/or receive frames or packets during a normal operation mode. The wake-up radio and the main radio can be implemented separately (such as using discrete components or separate integrated circuits) or in a common integrated circuit.

Networking subsystem 1514 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 1500 can use the mechanisms in networking subsystem 1514 for performing simple wireless communication between the electronic devices, e.g., transmitting advertising or frame frames and/or scanning for advertising frames transmitted by other electronic devices.

Within electronic device 1500, processing subsystem 1510, memory subsystem 1512 and networking subsystem 1514 are coupled together using bus 1528 that facilitates data transfer between these components. Bus 1528 can include an electrical, optical, and/or electro-optical connection that the subsystems can use to communicate commands and data among one another. Although only one bus 1528 is shown for clarity, different embodiments can include a different number or configuration of electrical, optical, and/or electro-optical connections among the subsystems.

In some embodiments, electronic device 1500 includes a display subsystem 1526 for displaying information on a display, which can include a display driver and the display, such as a liquid-crystal display, a multi-touch touchscreen, etc. Display subsystem 1526 can be controlled by processing subsystem 1510 to display information to a user (e.g., information relating to incoming, outgoing, or an active communication session).

Moreover, electronic device 1500 can also include a user-input subsystem 1530 that allows a user of the electronic device 1500 to interact with electronic device 1500. For example, user-input subsystem 1530 can take a variety of forms, such as: a button, keypad, dial, touch screen, audio input interface, visual/image capture input interface, input in the form of sensor data, etc.

Electronic device 1500 can be (or can be included in) any electronic device with at least one network interface. For example, electronic device 1500 can include: a cellular telephone or a smartphone, a tablet computer, a laptop computer, a notebook computer, a personal or desktop computer, a netbook computer, a media player device, a wireless speaker, an IoT device, an electronic book device, a MiFi^{®} device, a smartwatch, a wearable computing device, a portable computing device, a consumer-electronic device, a vehicle, a door, a window, a portal, an access point, a router, a switch, communication equipment, test equipment, as well as any other type of electronic computing device having wireless communication capability that can include communication via one or more wireless communication protocols.

Although specific components are used to describe electronic device 1500, in alternative embodiments, different components and/or subsystems can be present in electronic device 1500. For example, electronic device 1500 can include one or more additional processing subsystems, memory subsystems, networking subsystems, and/or display subsystems. Additionally, one or more of the subsystems may not be present in electronic device 1500. Moreover, in some embodiments, electronic device 1500 can include one or more additional subsystems that are not shown in FIG. 15. In some embodiments, electronic device can include an analysis subsystem that performs at least some of the operations in the communication techniques. Also, although separate subsystems are shown in FIG. 15, in some embodiments some or all of a given subsystem or component can be integrated into one or more of the other subsystems or component(s) in electronic device 1500. For example, in some embodiments program instructions 1522 are included in operating system 1524 and/or control logic 1516 is included in the one or more interface circuits 1518.

Moreover, the circuits and components in electronic device 1500 can be implemented using any combination of analog and/or digital circuitry, including: bipolar, PMOS and/or NMOS gates or transistors. Furthermore, signals in these embodiments can include digital signals that have approximately discrete values and/or analog signals that have continuous values. Additionally, components and circuits can be single-ended or differential, and power supplies can be unipolar or bipolar.

An integrated circuit can implement some or all of the functionality of networking subsystem 1514. This integrated circuit can include hardware and/or software mechanisms that are used for transmitting wireless signals from electronic device 1500 and receiving signals at electronic device 1500 from other electronic devices. Aside from the mechanisms herein described, radios are generally known in the art and hence are not described in detail. In general, networking subsystem 1514 and/or the integrated circuit can include any number of radios. Note that the radios in multiple-radio embodiments function in a similar way to the described single-radio embodiments.

In some embodiments, networking subsystem 1514 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein includes receiving signals from other electronic devices and possibly performing one or more processing operations on the received signals).

In some embodiments, an output of a process for designing the integrated circuit, or a portion of the integrated circuit, which includes one or more of the circuits described herein can be a computer-readable medium such as, for example, a magnetic tape or an optical or magnetic disk. The computer-readable medium can be encoded with data structures or other information describing circuitry that can be physically instantiated as the integrated circuit or the portion of the integrated circuit. Although various formats can be used for such encoding, these data structures are commonly written in: Caltech Intermediate Format (CIF), Calma GDS II Stream Format (GDSII), Electronic Design Interchange Format (EDIF), OpenAccess (OA), or Open Artwork System Interchange Standard (OASIS). Those of skill in the art of integrated circuit design can develop such data structures from schematic diagrams of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used a Wi-Fi communication protocol as an illustrative example, in other embodiments a wide variety of communication protocols and, more generally, wireless communication techniques can be used. Thus, the communication techniques can be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments can be performed in hardware, in software or both. For example, at least some of the operations in the communication techniques can be implemented using program instructions 1522, operating system 1524 (such as a driver for an interface circuit in networking subsystem 1514) or in firmware in an interface circuit networking subsystem 1514. Alternatively or additionally, at least some of the operations in the communication techniques can be implemented in a physical layer, such as hardware in an interface circuit or interface circuitry in networking subsystem 1514. In some embodiments, the communication techniques are implemented, at least in part, in a MAC layer and/or in a physical layer in an interface circuit in networking subsystem 1514.

Note that the use of the phrases 'capable of,' 'capable to,' 'operable to,' or 'configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

Moreover, while the preceding embodiments illustrated the use of wireless signals in one or more bands of frequencies, in other embodiments of the communication techniques electromagnetic signals in one or more different frequency bands are used. For example, these signals can be communicated in one or more bands of frequencies, including: a microwave frequency band, a radar frequency band, 900 MHz, 2.4 GHz, 5 GHz, 6 GHz, 60 GHz, and/or a band of frequencies used by a Citizens Broadband Radio Service or by LTE.

In the preceding description, we refer to 'some embodiments.' Note that 'some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein can be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

## Claims

1. An electronic device, comprising:
an antenna node configured to communicatively couple to an antenna; and
an interface circuit, communicatively coupled to the antenna node, configured to communicate with a second electronic device, wherein the interface circuit is configured to:
receive, associated with at least the second electronic device, a trigger frame comprising an indication, in a common information field or a special user information field, that at least a portion of the trigger frame is protected.

2. The electronic device of claim 1, wherein the electronic device comprises a station or client device that is associated with an access point and the second electronic device comprises the access point.

3. The electronic device of claim 2, wherein the electronic device is configured to negotiate use of the protected trigger frame when the electronic device associates with the second electronic device.

4. The electronic device of any preceding claim, wherein the trigger frame comprises a Multi-User Request to Send, MU-RTS, frame or a Buffer Status Report Poll, BSRP, frame.

5. The electronic device of any preceding claim, wherein, when the trigger frame is different from an initial control frame, ICF,, the trigger frame comprises a pre-padding field, located before a padding field, having a packet number, PN, and a message integrity code, MIC.

6. The electronic device of any preceding claim, wherein, when the trigger frame comprises an initial control frame, ICF, and a station or client only support use of a pre-padding frame check sequence, FCS, field, the trigger frame comprises:
a pre-padding field having a packet number, PN, and a message integrity code, MIC; and
the pre-padding FCS field, wherein the pre-padding FCS field is located after the pre-padding field and before a padding field, and the pre-padding FCS field comprises a four-octet FCS encoded in one or more user information fields.

7. The electronic device of any preceding claim, wherein, when the trigger frame comprises an initial control frame, ICF, and a station or client supports use of a message integrity code, MIC, the trigger frame comprises a pre-padding field having a packet number, PN, and the MIC; and
the pre-padding field is located after a user information field and before a padding field.

8. The electronic device of any preceding claim, wherein the indication is included in a reserved bit in the common information field or the special user information field.

9. The electronic device of any preceding claim, wherein the trigger frame comprises a key identifier included in the common information field or the special user information field.

10. The electronic device of any preceding claim, wherein the trigger frame comprises a pre-padding field having a message integrity code, MIC, and a start of at least a padding field duration or the pre-padding frame check sequence, FCS, field duration is determined from a bit of the pre-padding field.

11. The electronic device of any preceding claim, wherein the protection comprises integrity protection for at least the portion of the trigger frame.

12. A method for receiving a trigger frame, comprising:
by an electronic device:
receiving, associated with at least a second electronic device, the trigger frame comprising an indication, in a common information field or a special user information field, that at least a portion of the trigger frame is protected; and
providing, addressed to the second electronic device, a response to the trigger frame.

13. The method of claim 12, wherein the method comprises negotiating use of the protected trigger frame when the electronic device associates with the second electronic device.

14. The method of claim 12 or claim 13, wherein the trigger frame comprises a Multi-User Request to Send, MU-RTS, frame or a Buffer Status Report Poll, BSRP, frame.

15. The method of any of claims 12 to 14, wherein, when the trigger frame is different from an initial control frame, ICF, the trigger frame comprises a pre-padding field, located before a padding field, having a packet number, PN, and a message integrity code, MIC.
